# EUROPÄISCHE PATENTSCHRIFT

(11) **EP 2 165 068 B1**
(45) Veröffentlichungstag und Bekanntmachung des Hinweises auf die Patenterteilung: **29.06.2011**
(21) Anmeldenummer: 08785948.4
(22) Anmeldetag: 07.07.2008
(51) Int. Cl.: F02M 35/16, B60K 13/02

(54) **AUFPRALLDÄMPFER**
IMPACT ABSORBER
PARE-CHOCS

(30) Priorität: 05.07.2007 DE 202007009464 U
(43) Veröffentlichungstag der Anmeldung: 24.03.2010
(73) Patentinhaber: MANN+HUMMEL GmbH, 71638 Ludwigsburg (DE)
(72) Erfinder: BÜHLER, Albrecht, 74336 Brackenheim (DE); WALTENBERG, Klaus, 71723 Grossbottwar (DE); BÜHL, Heinz, 74235 Erlenbach (DE); SCHUSTER, Mathias, 75242 Neuhausen (DE)
(86) Internationale Anmeldenummer: PCT/EP2008/058765
(87) Internationale Veröffentlichungsnummer: WO 2010/003449

(56) Entgegenhaltungen:
- EP-A- 1 916 161
- EP-A- 1 990 225
- DE-A- 4 306 397
- DE-A- 4 419 219
- DE-A- 10 257 857
- DE-A-102006 023 350
- GB-A- 907 236
- US-B1- 6 945 576

## Beschreibung

### Technisches Gebiet

Die Erfindung betrifft einen Aufpralldämpfer eines Kraftfahrzeuges zur Bildung eines Fußgängeraufprallschutzes mit den Merkmalen nach dem Oberbegriff des Anspruchs 1.

### Stand der Technik

Bei der Steigerung der Verkehrssicherheit kommt auch dem Fußgängerschutz steigende Bedeutung zu. Im Falle des Aufpralls eines Fußgängers sollen relevante Karosserieteile wie die Motorhaube oder dergleichen kontrolliert nachgeben, um das Verletzungsrisiko für den Fußgänger zu mindern. Hierzu wird die Außenhaut in vorbekannter Weise innenseitig mit einem Aufpralldämpfer versehen, der ein nachgiebiges, energieabsorbierendes Dämpfungsmaterial umfasst. Für eine volle Wirksamkeit der hierdurch bereitgestellten Fähigkeit zur Stoßenergieaufnahme ist ein hinreichend großer Nachgiebigkeitsweg erforderlich, um den sich die Außenhaut im Falle eines Aufpralls ungehindert deformieren kann. Diese Nachgiebigkeit wird durch eine Vielzahl von Einbauteilen im Motorraum begrenzt, die als Anschlag für den Auslenkungsweg der Außenhaut wirken.
Die Schrift EP1 916 161 A offenbart ein im Motorraum montierten Luftfilter mit einem nachgiebigen Gehäuse. Das Filtersystem besteht aus einem Gehäuseoberteil und einem Gehäuseunterteil, wobei das Oberteil ein Stützgitter aufweist, welches mit einem Schaumstoffmaterial umschäumt ist und das Stützgitter eine Durchbiegung des Oberteils in Richtung Unterteil unter Krafteinwirkung gewährleistet.
In der DE 43 06 397 A wird ein Schalldämpfer für ein strömendes gasförmiges Medium beschrieben. Das Gehäuse besteht aus einer schallabsorbierenden Auskleidung, einer Ausfüllung des Gehäuses und einer außenseitigen biegeweichen hochverdichteten Schaumfolie.
Das Dokument DE 44 189 219 A1 zeigt eine Schalldämpfungseinrichtung für luftführende Kanäle. Ein Luftansaugrohr ist im Bereich der Außenwand eines Karosseriebauteils angeordnet. Zwischen Karosserieaußenwand und dem Luftansaugrohr ist ein schallabsorbierendes Element angeordnet, das einen definierten Raum umschließt und von der angesaugten Luft durchströmt wird. Die Schrift US 6 945 576B1 zeigt einen gattungsgemäβen Aufpralldämpfer (Stoßfänger) eines Kraftfahrzeuges, in den ein separates Luftfiltersystem, bestehend aus Rohluftleitung, Filtergehäuse, Filterelement und Reinluftleitung, eingebaut ist, wobei ungenutzter Raum um das Luftfiltersystem mit energieabsorbierendem Material gefüllt ist, um Energie zu absorbieren.

Um dennoch einen hinreichend großen Verformungsweg bereitzustellen, schlägt die DE 100 28 856 A1 eine Motorhaube mit einem innenseitigen Dämpfungsmaterial, einem Frischluftführungskanal und einer Filteranordnung vor. Das Dämpfungsmaterial bildet eine Energieaufnahmestruktur, die über die Abmessungen des Frischluftführungskanals ausgespart ist. Der Frischluftkanal ist einschließlich des Filterraumes flächenbündig in die Energieaufnahmestruktur eingebettet. Hierdurch soll erreicht werden, dass diese Teile des Luftansaugsystems, die sonst üblicherweise motorfest und/oder karosseriefest montiert sind, den Auslenkungsweg für die Energieabsorption nicht beeinträchtigen. Nachteilig bei dieser Ausgestaltung ist jedoch, dass die Energieaufnahmestruktur im Bereich der vorgenannten Teile des Luftansaugsystems ausgespart ist. In diesem Bereich ist die Energieaufnahmefähigkeit der Außenhaut beim Aufprall verringert. Die Schutzwirkung ist nicht optimal. Die Energieaufnahmestruktur und die Teile des Luftansaugsystems müssen geometrisch komplex ineinander verschachtelt werden, was zu hohen Fertigungs- und Montagekosten führt.

Der Erfindung liegt die Aufgabe zugrunde, einen gattungsgemäßen Aufpralldämpfer derart weiterzubilden, dass seine Schutzfunktion verbessert ist.

Diese Aufgabe wird durch einen Aufpralldämpfer mit den Merkmalen des Anspruchs 1 gelöst.

### Offenbarung der Erfindung

Es wird ein Aufpralldämpfer vorgeschlagen, bei dem das Dämpfungsmaterial Teile des Luftansaugsystems zumindest in einer senkrecht zur Außenhaut liegenden Aufprallrichtung umschließt. Vorteilhaft ist das Dämpfungsmaterial ein Schaum, wobei Teile des Luftansaugsystems mit dem Dämpfungsmaterial umschäumt sind. Die Teile des Luftansaugsystems, insbesondere ein Luftfilter, eine Sensorik und/oder ein Akustikelement sind auf eine solche Weise in den Aufpralldämpfer integriert, dass dessen Dämpfungsfunktion - verteilt über die Fläche der Außenhaut - lückenlos gewährleistet ist. Selbst im Bereich der integrierten Teile des Luftansaugsystems ist Dämpfungsmaterial vorhanden, welches in der senkrecht zur Außenhaut liegenden Aufprallrichtung wirkt. Durch die Umschäumung der Teile des Luftansaugsystems mit dem Dämpfungsmaterial ergibt sich ein inniger Verbund zwischen den einzelnen Komponenten mit hoher Dämpfungswirkung. Durch die integrierte Bauweise können die besagten Teile des Luftansaugsystems weich und nachgiebig ausgestaltet sein, da das umschließende Dämpfungsmaterial eine Stützwirkung ausübt. Separate Gehäuse oder dergleichen sind nicht erforderlich. Neben verringertem Fertigungs- und Montageaufwand ergibt sich insgesamt eine hohe Nachgiebigkeit der Teile des Luftansaugsystems. Unerwünschte lokale Steifigkeitserhöhungen sind vermieden.

In einer bevorzugten Ausführungsform ist ein Gehäuse des Luftfilters ungeteilt ausgebildet und vom Dämpfungsmaterial umschlossen. In einer vorteilhaften Alternative ist das Gehäuse des Luftfilters durch das Dämpfungsmaterial gebildet. In beiden Fällen wird auf eine Teilungsebene verzichtet, um ein zumindest in Umfangsrichtung vollständiges Umschließen mit dem schaumförmigen Dämpfungsmaterial zu ermöglichen. Der schaumartige Dämpfungskörper ist dabei ebenfalls ungeteilt. Durch diese monolithische Bauweise hat er selbst bei vergleichsweise dünnwandiger Ausführung ein hohes Energieabsorptionsvermögen. Der Austausch eines Filterelementes kann hierbei, sofern erforderlich, koaxial zum Gehäuse des Luftfilters erfolgen, sofern hier eine entsprechende Wartungsöffnung vorgesehen ist. Es kann auch zweckmäßig sein, sogenannte Lebensdauerfilter einzusetzen, die über die Lebensdauer der gesamten Baueinheit nicht ausgewechselt werden müssen. In diesem Fall kann das gesamte Bauteil als in sich geschlossener Aufpralldämpfer ausgeführt sein, dessen einheitlich geschäumtes Dämpfungsmaterial frei von Schnitten, Öffnungen oder anderen Unterbrechungen ist.

In zweckmäßiger Weiterbildung ist ein Filterelement des Filters bezogen auf die Aufprallrichtung nachgiebig ausgestaltet. Hierdurch trägt es selbst zur Energieabsorption beim Aufprall bei. Die Dämpfungswirkung ist nicht nur auf das umhüllende Dämpfungsmaterial beschränkt.

Erfindungsgemäß ist der Luftfilter in Form mindestens einer, insbesondere mehrerer parallel zueinander geschalteter, langgestreckter Röhren mit innenliegenden Filtersäcken ausgebildet. Die langgestreckte Röhrenform erlaubt die Verlegung innerhalb vergleichsweise dünner Schichten des Dämpfungsmaterials, wobei die Röhren gekrümmt verlaufen und sich dabei dem Verlauf der Außenhaut anpassen können. Auch die Innenliegenden Filtersäcke sind nachgiebig und passen sich dem gekrümmten Röhrenverlauf an. Diese Eigenschaft wird auch im Falle eines Aufpralles genutzt: Die Röhren mit den innenliegenden Filtersäcken geben ohne weiteres nach und erlauben so eine wirkungsvolle Energieabsorption.

Als bevorzugte Position des Aufpralldämpfers mit erfindungsgemäß integrierten Teilen des Luftansaugsystems hat sich die Anordnung innenseitig der Motorhaube, der Frontschürze, des Kotflügels bzw. des Radkastens herausgestellt.

### Kurze Beschreibung der Zeichnungen

Ausführungsbeispiele der Erfindung sind nachfolgend anhand der Zeichnung näher beschrieben. Es zeigen:

Figur 1 in perspektivischer Schemadarstellung den Frontbereich eines Kraftfahrzeuges mit einem innenseitig der Motorhaube angeordneten Aufpralldämpfer, der Teile des Ansaugsystems umschließt;

Figur 2 eine Variante der Anordnung nach Figur 1 mit einem innenseitig der Frontschürze angeordneten, Teile des Ansaugsystems umschließenden Aufpralldämpfer;

Figur 3 ein weiteres Ausführungsbeispiel der Erfindung mit innenseitig des Kotflügels angeordnetem Aufpralldämpfer;

Figur 4 in schematischer Längsschnittdarstellung den erfindungsgemäßen Aufpralldämpfer mit Einzelheiten eines eingeschäumten Luftfilters.

### Ausführungsform der Erfindung

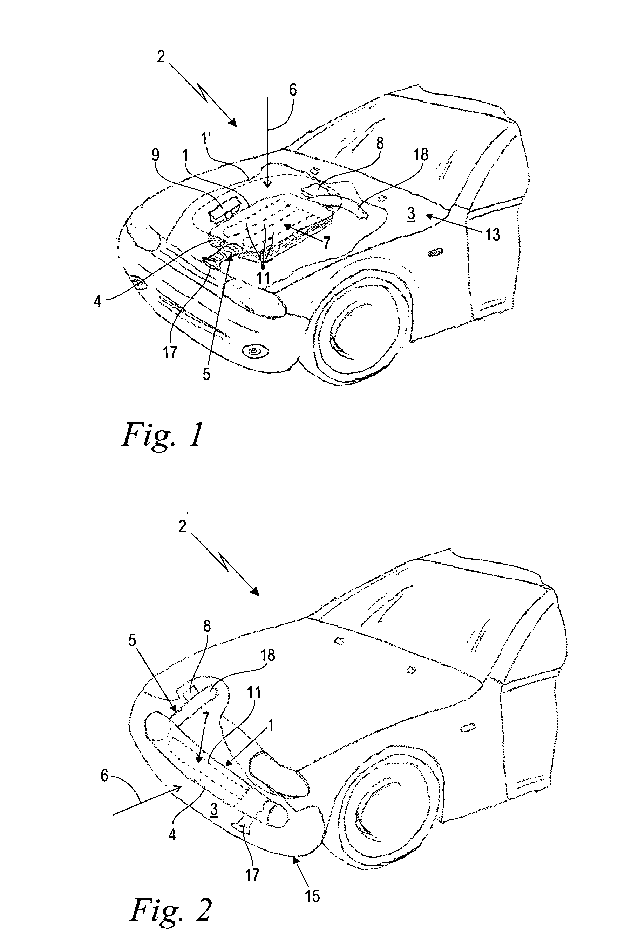

Fig. 1 zeigt in perspektivischer Schemadarstellung den Frontbereich eines Kraftfahrzeuges 2 mit einer Motorhaube 13. Das Kraftfahrzeug 2 ist mit einem Aufpralldämpfer 1 zur Bildung eines Fußgängeraufprallschutzes versehen. Das Kraftfahrzeug 2 weist eine Außenhaut 3 auf, die anteilig durch die Motorhaube 13 gebildet ist. Der Aufpralldämpfer 1 ist an der Außenhaut 3 innenseitig montiert, hier also auf der Innenseite der Motorhaube 13. Er umfasst ein nachgiebiges, Energie absorbierendes Dämpfungsmaterial 4. Als Dämpfungsmaterial 4 kommt bevorzugt ein geeigneter Schaum zum Einsatz. Es können jedoch auch andere Dämpfungsmaterialien 4 wie Wabenstrukturen oder dergleichen zweckmäßig sein. Im Falle einer Kollision mit einem Fußgänger erfolgt ein Aufprall auf die Außenhaut 3, dessen verletzungsrelevante Richtungskomponente senkrecht zur Außenhaut 3 liegt. Diese wird nachfolgend entsprechend einem Pfeil 6 als Aufprallrichtung bezeichnet. Die Außenhaut 3 ist im Bereich des Aufpralldämpfers 1 in der Aufprallrichtung 6 nachgiebig, wobei das Dämpfungsmaterial 4 eine energieabsorbierende Wirkung beisteuert.

Das Kraftfahrzeug 2 weist des weiteren ein Luftansaugsystem 5 zur Versorgung eines Antriebsmotors mit Verbrennungsluft auf, welches hier nur ausschnittsweise dargestellt ist. Das Luftansaugsystem 5 umfasst einen Rohlufteintritt 17, einen Luftfilter 7, eine Sensorik 8, ein Akustikelement 9 sowie einen Reinluftaustritt 18. Die über den Rohlufteintritt 17 angesaugte Verbrennungsluft wird im Luftfilter 7 von Staub oder dergleichen gereinigt und über den Reinluftaustritt 18 dem Antriebsmotor zugeführt. Die dabei entstehenden Ansauggeräusche können über das Akustikelement 9 beeinflusst werden. Die Sensorik 8 erfasst die für die Motorsteuerung erforderlichen Daten des Ansaugluftstromes.

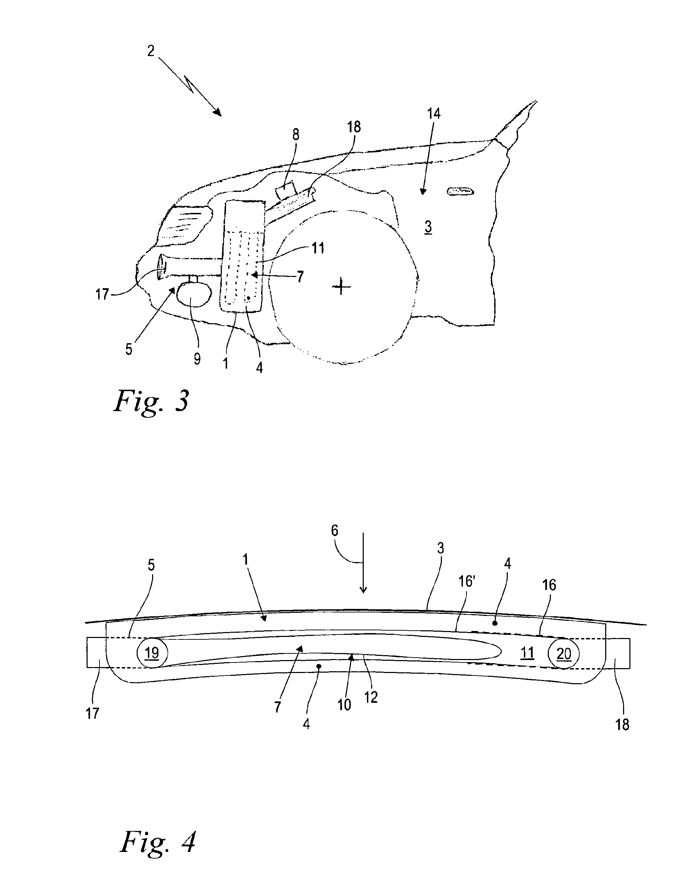

Nach der Erfindung ist vorgesehen, dass das Dämpfungsmaterial 4 Teile des Ansaugluftsystems 5 zumindest in der senkrecht zur Außenhaut 3 liegenden Aufprallrichtung 6 umschließt. Hierzu ist im gezeigten Ausführungsbeispiel der Luftfilter 7 mit dem Dämpfungsmaterial 4 umschäumt. Das Dämpfungsmaterial 4 ist hierbei als flacher Plattenkörper ausgebildet, in dem mehrere strömungsleitend parallel geschaltete Röhren 11 zur Bildung des Luftfilters 7 eingeformt sind. Einzelheiten hierzu sind weiter unten im Zusammenhang mit Fig. 4 beschrieben. Alternativ oder zusätzlich können auch weitere Komponenten des Luftansaugsystems 5, wie beispielhaft die Sensorik 8 und/oder das Akustikelement 9 vom Dämpfungsmaterial 4 umschlossen sein, wie dies durch die gestrichelte Kontur des angedeuteten Aufpralldämpfers 1 ' dargestellt ist.

Die Fig. 2 und 3 zeigen Varianten der Anordnung nach Fig. 1. Im Vergleich zur Fig. 1 sind gleiche Merkmale mit gleichen Bezugszeichen versehen. Eine Frontschürze 15 und ein Kotflügel 14 des Kraftfahrzeuges 2 bilden ebenfalls einen Teil der Außenhaut 3. Im Ausführungsbeispiel nach Fig. 2 ist der Aufpralldämpfer 1 mit Teilen des Luftansaugsystems 5 innenseitig der Frontschürze 15 angebracht. Die Aufprallrichtung 6 liegt hier im Wesentlichen waagerecht und dabei senkrecht zur Außenhaut 3 der Frontschürze 15. Der Aufpralldämpfer 1 verläuft seitlich quer auf der Innenseite der Frontschürze 15, wobei die mindestens eine Röhre 11 zur Bildung des Luftfilters 7 ebenfalls etwa horizontal und quer zur Fahrtrichtung des Kraftfahrzeuges 2 auf der Innenseite 2 der Frontschürze 15 innerhalb des Dämpfungsmaterials 4 verläuft.

Im Ausführungsbeispiel nach Fig. 3 ist der Aufpralldämpfer 1 mit den von ihm hermetisch umschlossenen Teilen des Luftansaugsystems 5 auf der Innenseite der durch einen Kotflügel 14 gebildeten Außenhaut 3 angeordnet. Die Röhren 11 zur Bildung des Luftfilters 7 verlaufen vertikal nach oben und schmiegen sich dabei an die Innenfläche der Außenhaut 3 an. Die übrigen Komponenten, wie insbesondere das Akustikelement 9 und die Sensorik 8, sind rings um den Radkasten des Vorderrades angebracht. Auch sie können bedarfsweise vom Dämpfungsmaterial 4 umschäumt oder in anderer Weise umschlossen sein.

Fig. 4 zeigt in schematischer Längsschnittdarstellung den erfindungsgemäßen Aufpralldämpfer 1 nach Fig. 1 mit Einzelheiten des eingeschäumten Luftfilters 7. Das nachfolgend Geschriebene gilt sinngemäß, soweit anwendbar, auch für die Ausführungsbeispiele nach den Fig. 2 und 3. Es ist zu erkennen, dass sich das Dämpfungsmaterial 4 in der Aufprallrichtung 6 oberhalb und unterhalb des Luftfilters 7 befindet, dass also das Dämpfungsmaterial 4 den Luftfilter 7 bezogen auf die Aufprallrichtung 6 umschließt. Sinngemäß das Gleiche gilt auch für den Fall, dass weitere Teile des Luftansaugsystems 5, wie beispielsweise die in Fig. 1 dargestellte Sensorik 8 oder das Akustikelement 9 vom Dämpfungsmaterial 4 umschlossen sind.

Die Außenhaut 3 ist räumlich gekrümmt. Der monolithische Schaumkörper des Dämpfungsmaterials 4 folgt dieser Krümmung. Der Luftfilter 7 ist in Form mehrerer, strömungsleitend parallel zueinander geschalteter, langgestreckter Röhren 11 ausgebildet, die in den Fig. 1 bis 3 angedeutet sind, und von denen der besseren Übersichtlichkeit halber in Fig. 4 nur eine einzige Röhre 11 dargestellt ist. Die einzelnen Röhren 11 sind eingangsseitig über einen Verteiler 19 mit dem Rohlufteintritt 17 verbunden. Ausgangsseitig sind die Röhren 11 über einen Sammler mit dem Reinluftaustritt 18 verbunden. Innerhalb der einzelnen Röhren 11 ist ein angedeuteter Filtersack 12 angeordnet. Ein Gehäuse 16' des Luftfilters 7 bzw. der jeweiligen Röhre 11 ist durch das Dämpfungsmaterial 4 gebildet, in dem die einzelnen Röhren 11 ohne zusätzliche stützende Maßnahmen in das Dämpfungsmaterial 4 beim Aufschäumen eingeformt sind. Dementsprechend ist der Schaumkörper aus dem Dämpfungsmaterial 4 verformbar, wobei auch die Röhren 11 diese Verformung ohne weiteres mitmachen. Das Gleiche gilt auch für den nachgiebigen Filtersack 12. Es kann jedoch auch zweckmäßig sein, ein insbesondere ungeteiltes, separates Gehäuse 16 entsprechend der gestrichelten Andeutung nach Fig. 4 in das Dämpfungsmaterial 4 einzuschäumen.

Anstelle des Filtersackes 12 können auch andere Formen von Filterelementen 10 eingesetzt werden, die bevorzugt in der Aufprallrichtung 6 nachgiebig ausgeführt sind. In entsprechender Ausgestaltung können die Filterelemente 10 selbst bei monolithisch ungeteiltem Dämpfungsmaterial 4 und auch bei ungeteiltem Gehäuse 16 des Luftfilters 7 beispielsweise durch den Rohlufteintritt 17 oder den Reinluftaustritt 18 hindurch ausgetauscht werden. Alternativ kann es zweckmäßig sein, Lebensdauerfilter einzusetzen.

## Patentansprüche

1. Aufpralldämpfer (1) eines Kraftfahrzeuges (2) zur Bildung eines Fußgängeraufprallschutzes, innenseitig an einer Außenhaut (3) des Kraftfahrzeuges (2) angebracht, umfassend ein nachgiebiges, Energie absorbierendes Dämpfungsmaterial (4), wobei das Dämpfungsmaterial (4) Teile eines Luftansaugsystems (5) des Kraftfahrzeuges (2) zumindest in einer senkrecht zur Außenhaut (3) liegenden Aufprallrichtung (6) umschließt, wobei die Teile des Luftansaugsystems (5) einen Luftfilter (7), eine Sensorik (8) und/oder ein Akustikelement (9) umfassen, **dadurch gekennzeichnet, dass** der umschlossene Luftfilter (7) des Aufpralldämpfers in Form mindestens einer, insbesondere mehrerer parallel zu einander geschalteter, lang gestreckter Röhren (11) mit innen liegenden Filtersäcken (12) ausgebildet ist.

2. Aufpralldämpfer nach Anspruch 1, **dadurch gekennzeichnet, dass** das Dämpfungsmaterial (4) ein Schaum ist, und daß die Teile des Luftansaugsystems (5) mit dem Dämpfungsmaterial (4) umschäumt sind.

3. Aufpralldämpfer nach Anspruch 1 oder 2, **dadurch gekennzeichnet, dass** ein Gehäuse (16) des Luftfilters (7) ungeteilt ausgebildet und vom Dämpfungsmaterial (4) umschlossen ist.

4. Aufpralldämpfer nach Anspruch 1 oder 2, **dadurch gekennzeichnet, dass** das Gehäuse (16') des Luftfilters (7) durch das Dämpfungsmaterial (4) gebildet ist.

5. Aufpralldämpfer nach einem der vorherigen Ansprüche, **dadurch gekennzeichnet, dass** ein Filterelement (10) des Luftfilters (7) bezogen auf die Aufprallrichtung (6) nachgiebig ausgestaltet ist.

6. Aufpralldämpfer nach einem der Ansprüche 1 bis 5, **dadurch gekennzeichnet, dass** der Aufpralldämpfer (1) mit den Teilen des Luftansaugsystems (5) innenseitig einer Motorhaube (13) des Kraftfahrzeuges (2) angebracht ist.

7. Aufpralldämpfer nach einem der Ansprüche 1 bis 5, **dadurch gekennzeichnet, dass** der Aufpralldämpfer (1) mit den Teilen des Luftansaugsystems (5) innenseitig eines Kotflügels (14) des Kraftfahrzeuges (2) angebracht ist.

8. Aufpralldämpfer nach einem der Ansprüche 1 bis 5, **dadurch gekennzeichnet, dass** der Aufpralldämpfer (1) mit den Teilen des Luftansaugsystems (5) innenseitig einer Frontschürze (15) des Kraftfahrzeuges (2) angebracht ist.

## Claims

1. Impact absorber (1) of a motor vehicle (2) for creating a pedestrian impact protection, attached to the interior side at an outer skin (3) of the motor vehicle (2), comprising a flexible energy-absorbing damping material (4), the damping material (4) enclosing parts of an air intake system (5) of the motor vehicle (2) at least in an impact direction vertical to the outer skin (3), the parts of the air intake system (5) comprising an air filter (7), a sensor technology (8) and/or an acoustic element (9), **characterized in that** the enclosed air filter (7) of the impact absorber is designed in the shape of at least one, in particular several elongated tubes (11) connected parallel to each other with inside located filter bags (12).

2. Impact absorber according to claim 1, **characterized in that** the damping material (4) is foam, and that the parts of the air intake system (5) are surrounded by the damping material (4).

3. Impact absorber according to claim 1 or 2, **characterized in that** a housing (16) of the air filter (7) is designed as one piece and surrounded by the damping material (4).

4. Impact absorber according to claim 1 or 2, **characterized in that** a housing (16') of the air filter (7) is formed by the damping material (4).

5. Impact absorber according to one of the above claims, **characterized in that** a filter element (10) of the air filter (7) is designed flexibly in relation to the impact direction.

6. Impact absorber according to one of the claims 1 to 5, **characterized in that** the impact absorber (1) together with the parts of the air intake system (5) is attached at the interior side of an engine hood (13) of the motor vehicle (2).

7. Impact absorber according to one of the claims 1 to 5, **characterized in that** the impact absorber (1) together with the parts of the air intake system (5) is attached at the interior side of a fender (14) of the motor vehicle (2).

8. Impact absorber according to one of the claims 1 to 5, **characterized in that** the impact absorber (1) together with the parts of the air intake system (5) is attached at the interior side of a front apron (15) of the motor vehicle (2).

## Revendications

1. Amortisseur de chocs (1) d'un véhicule automobile (2) destiné à former un amortisseur de chocs pour piétons, monté sur la face intérieure d'une peau extérieure (3) du véhicule automobile (2), comprenant un matériau d'amortissement (4) flexible absorbant l'énergie, le matériau d'amortissement (4) entourant des parties d'un système d'aspiration d'air (5) du véhicule automobile (2) au moins dans une direction de choc (6) verticale à la peau extérieure (3), les parties du système d'aspiration d'air (5) comprenant un filtre à air (7), un système de détection (8) et/ou un élément acoustique (9), **caractérisé en ce que** le filtre à air (7) entouré de l'amortisseur de chocs est exécuté sous forme d'au moins un tube, en particulier de plusieurs tubes (11) longitudinaux montés en parallèle avec des sacs filtrants (12) intérieurs.

2. Amortisseur de chocs selon la revendication 1, **caractérisé en ce que** le matériau d'amortissement (4) est une mousse et que les parties du système d'aspiration d'air (5) sont entourées de la mousse constituée du matériau d'amortissement (4).

3. Amortisseur de chocs selon la revendication 1 ou 2, **caractérisé en ce qu'**un boîtier (16) du filtre à air (7) est formé d'un seul bloc et est entouré du matériau d'amortissement (4).

4. Amortisseur de chocs selon la revendication 1 ou 2, **caractérisé en ce que** le boîtier (16') du filtre à air (7) est formé par le matériau d'amortissement (4).

5. Amortisseur de chocs selon l'une des revendications précédentes, **caractérisé en ce qu'**un élément de filtre (10) du filtre à air (7) est conçu de manière flexible par rapport à la direction du choc (6).

6. Amortisseur de chocs selon l'une des revendications 1 à 5, **caractérisé en ce que** l'amortisseur de chocs (1) est monté avec les parties du système d'aspiration d'air (5) sur la face intérieure d'un capot (13) du véhicule automobile (2).

7. Amortisseur de chocs selon l'une des revendications 1 à 5, **caractérisé en ce que** l'amortisseur de chocs (1) est monté avec les parties du système d'aspiration d'air (5) sur la face intérieure d'un pare-boue (14) du véhicule automobile (2).

8. Amortisseur de chocs selon l'une des revendications 1 à 5, **caractérisé en ce que** l'amortisseur de chocs (1) est monté avec les parties du système d'aspiration d'air (5) sur la face intérieure d'une jupe avant (15) du véhicule automobile (2).
